# EUROPEAN PATENT SPECIFICATION

(11) **EP 0 539 633 B1**
(45) Date of publication and mention of the grant of the patent: **14.05.1997**
(21) Application number: 91309952.9
(22) Date of filing: 29.10.1991
(51) Int. Cl.: B23Q 1/25, B24B 7/00

(54) **Gantry-type machine tool**
Portalwerkzeugmaschine
Machine-outil avec portal

(43) Date of publication of application: 05.05.1993
(73) Proprietor: Yang, Tai-Her, Taipei (TW)
(72) Inventor: Yang, Tai-Her, Taipei (TW)
(74) Representative: Arthur, Bryan Edward

(56) References cited:
- CH-A- 136 984
- DE-A- 3 136 396
- FR-A- 2 358 967
- JP-A-54 128 895
- JP-A-62 034 761

## Description

This invention relates to apparatus for machining a workpiece by grinding, milling and polishing whereby residual stresses within the workpiece are reduced.

There are numerous known apparatuses which provide for the grinding, milling and polishing of workpieces. These apparatuses permit such work to be performed on workpieces which are both stationary and moving. Examples of such apparatuses are grinding centres, as well as the more conventional grinding machines, and the methods in which they are used.

While useful for their purposes, the use of such apparatuses for working on stationary workpieces presents particular problems. Specifically, where stationary workpieces are involved, internal residual stresses can build up in the workpieces, these stresses being generated by the working tool (e.g. a grinding wheel). These internal residual stresses can, in turn, result in a flow, or other deformation, of the material in the workpieces. Such deformed workpieces are useless, resulting in losses of time and material.

One known apparatus for grinding comprising the pre-characterising features of claims 1 and 2, respectively, is disclosed in CH-A-136984.

The aim of the present invention is to provide an apparatus for grinding, milling and polishing a stationary workpiece while reducing, or substantially eliminating, the flow or deformation of the material therein.

The present invention provides apparatus for machining a workpiece by grinding, milling and polishing whereby residual stresses within the workpiece are reduced, the apparatus comprising:
a machine body;
a bench for supporting the workpiece and for moving the workpiece longitudinally along the machine body;
a support frame having a portal structure and mounted on the machine body;
a transverse tool guide rail carried by the support frame;
a tool carriage movable along the tool guide rail transversely across the machine body;
a rotatable machine tool carried by the tool carriage;
means for driving the machine tool;
wherein relative movement between the machine tool and the workpiece in transverse and longitudinal directions are brought about by bi-directional movement of the tool carriage and movement of the bench along the machine respectively;
characterised in that the machine tool rotatable about a horizontal axis and is angularly adjustable in 90° steps about a vertical axis for cutting operations directed in a transverse direction across the machine body and in a longitudinal direction along the body; and
a locking device being provided for locking the machine tool in a selected angular position.

The invention also provides apparatus for machining a workpiece by grinding, milling and polishing whereby residual stresses within the workpiece are reduced, the apparatus comprising:
a machine body;
a bench for supporting the workpiece and for moving the workpiece longitudinally along the machine body;
a support frame having a portal structure and mounted on the machine body;
at least one transverse guide rail carried by the support frame;
a first tool carriage and a second tool carriage, each carriage being movable along said at least one transverse guide rail transversely across the machine body;
a first rotatable machine tool carried by the first tool carriage;
a second rotatable machine tool carried by the second tool carriage; and
means for driving the first and the second machine tools,
wherein relative movement between the first machine tool and the workpiece in a transverse direction is brought about by bi-directional movement of the first tool carriage along said at least one transverse guide rail, and relative movement between the second machine tool and the workpiece in a longitudinal direction is brought about by bi-directional movement of the bench along the machine;
characterised in that the first machine tool is rotatable about a horizontal longitudinal axis for cutting operations directed in a transverse direction across the machine body, and the second machine tool is rotatable about a horizontal transverse axis for cutting operations directed in a longitudinal direction along the machine body.

The invention will now be described in greater detail, by way of example, with reference to the drawings, in which:-
FIG. 1 is a perspective view of a first embodiment of the apparatus of the present invention, wherein the apparatus is incorporated into a grinding, milling or polishing centre;
FIG. 2 is a perspective view of a second embodiment of the apparatus of the present invention, wherein the apparatus is incorporated into a grinding, milling or polishing centre;
FIG. 3 is a perspective view of a third embodiment of the apparatus of the present invention, wherein the apparatus is incorporated into a grinding, milling or polishing centre; and
Tables 1 to 6 are flow charts of the use of the apparatus of the invention.

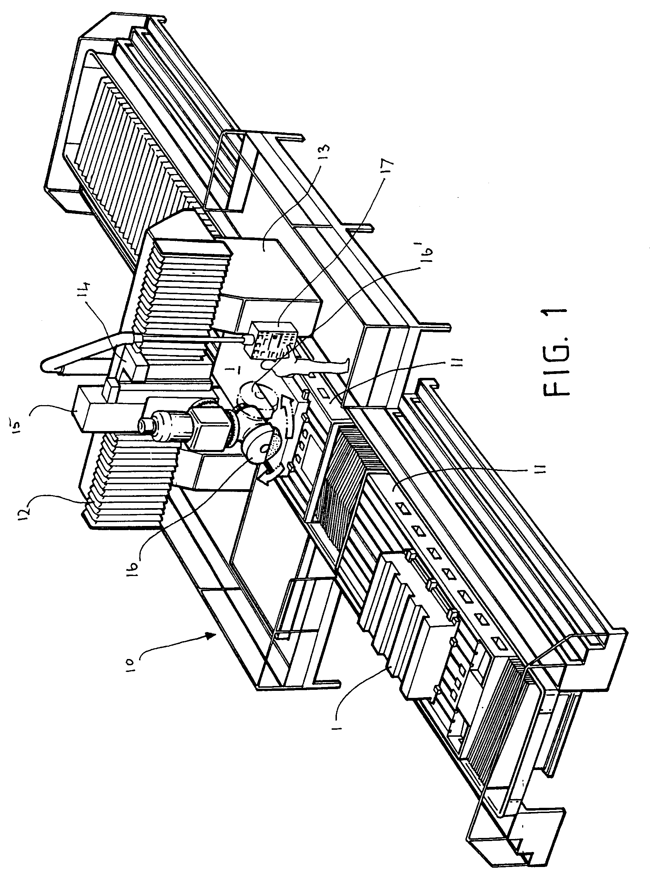

Referring to the drawings, FIGS. 1 - 3 show machining apparatus 10 which includes a bench 11 which supports a workpiece 1. A first (horizontal) working tool guide rail 12 is supported above the bench 11 by a support frame 13. A first (horizontal) carriage 14 is horizontally slidingly carried by the guide 12 for transverse movement of the carriage 14. Ball bearings, pneumatic membranes or other mediums well known to those skilled in the art may be provided to facilitate the sliding movement of the carriage 14 along the guide 12.

The carriage 14 supports a second (vertical) carriage 15 which, in turn, carries a working tool 16. This tool 16 may be a grinding tool, such as a grinding wheel, or any other conventional or unconventional tool, such as a polishing wheel, a milling wheel or a cutting tool which are well-known to those skilled in the art.

In this fashion, the tool 16 may contact the top of the workpiece 1 for performing work operations on the workpiece in a transverse plane, such as the facing off, grinding, milling or polishing of the top of the workpiece.

The tool 16 is rotatable about a horizontal axis, and is angularly adjustable in 90° steps. It can, therefore, be moved from the position shown in full lines to the position 16' shown in phantom lines for performing work operations in the longitudinal direction.

The movement of the carriages 14 and 15, as well as the operation and movement of the tool 16, can be controlled by an operator from a control panel 17.

Tables 1 to 4 are flow charts illustrating different operational cycles of the apparatus of Figure 1. Here, it should be noted that the "horizontal" direction is the transverse direction, and that the "vertical" direction is the longitudinal direction.

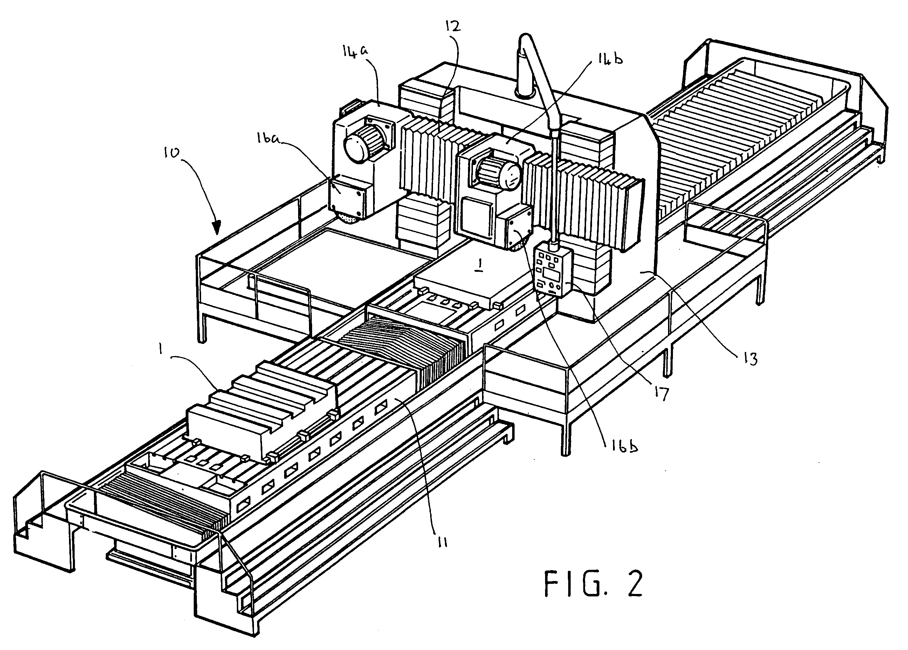

Figure 2 shows a modified form of the machining apparatus of Figure 1. Accordingly, like reference numerals will be used for like parts, and only the modifications will be described in detail. Thus, the apparatus of Figure 2 includes two carriages 14a and 14b, each of which is horizontally slidingly carried by the guide 12 for transverse movement. Each carriage 14a,14b supports a respective working tool 16a,16b. The tool 16a is arranged to contact the top of a workpiece 1 for performing work operations on the workpiece in a transverse plane, and the tool 16b is arranged to contact the top of the workpiece for performing work operations in a longitudinal plane.

Table 5 is a flow chart illustrating an operational cycle of the apparatus of Figure 2. Here again, it should be noted that the "horizontal" direction is the transverse direction, and that the "vertical" direction is the longitudinal direction.

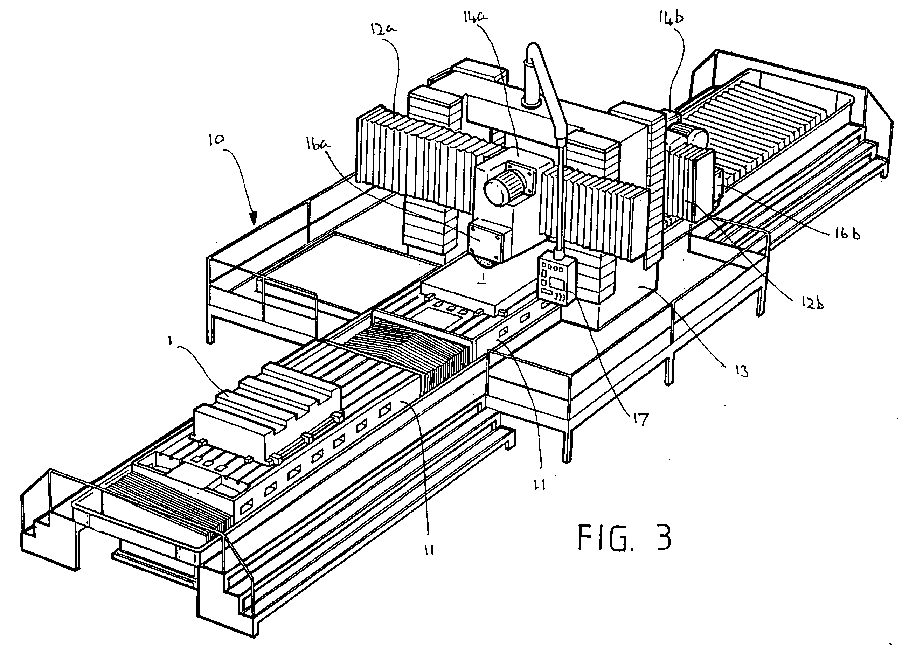

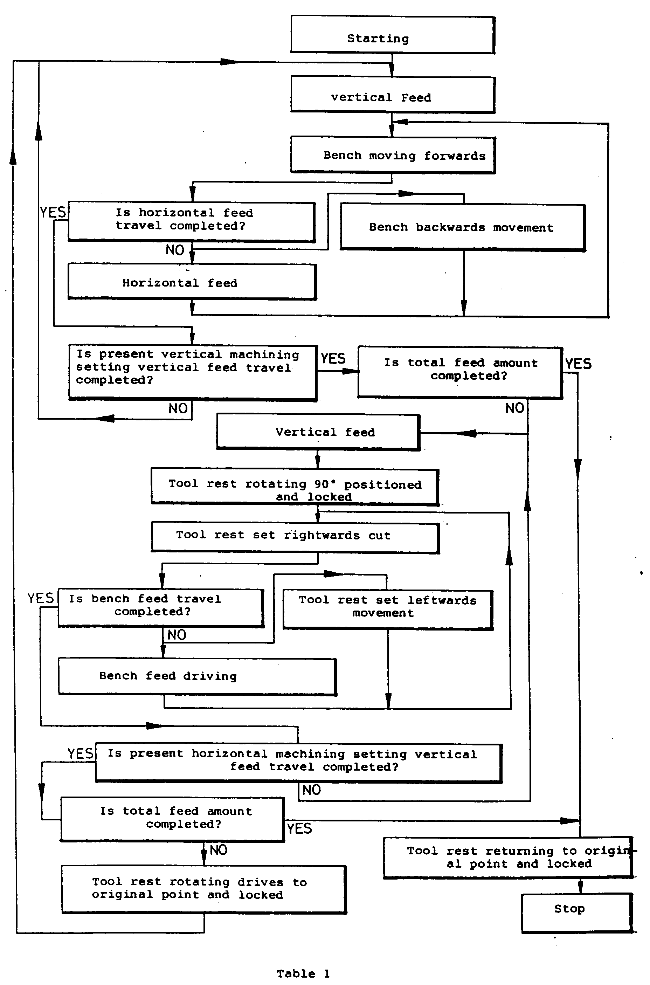

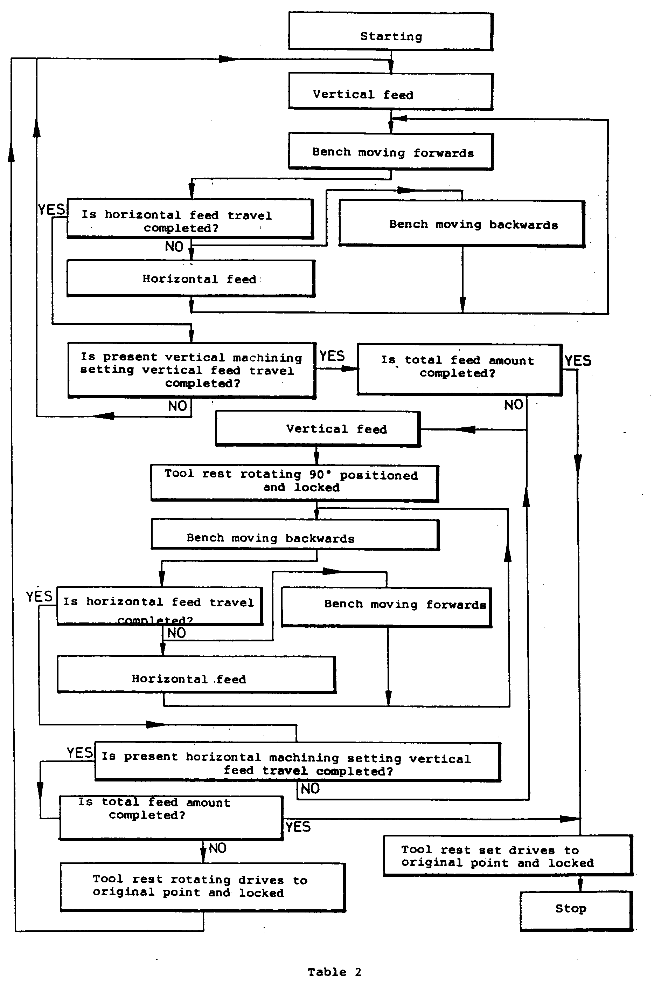

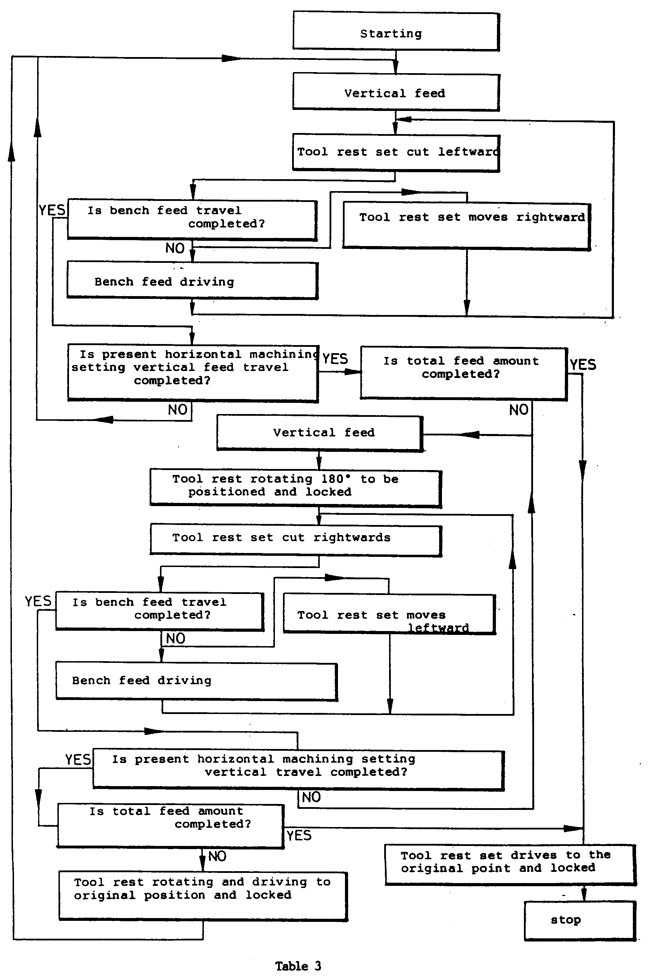

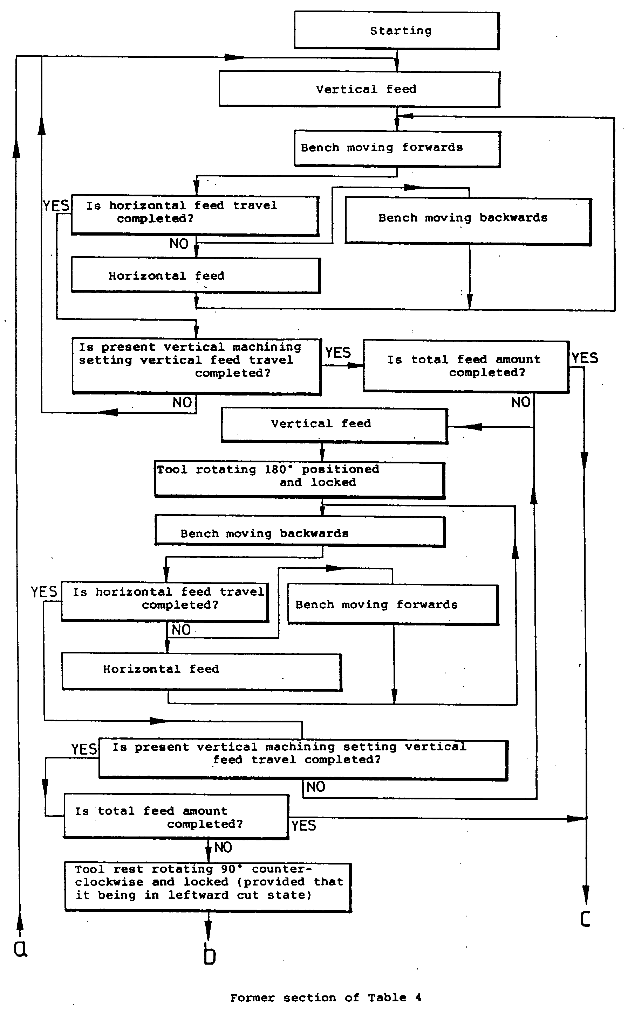

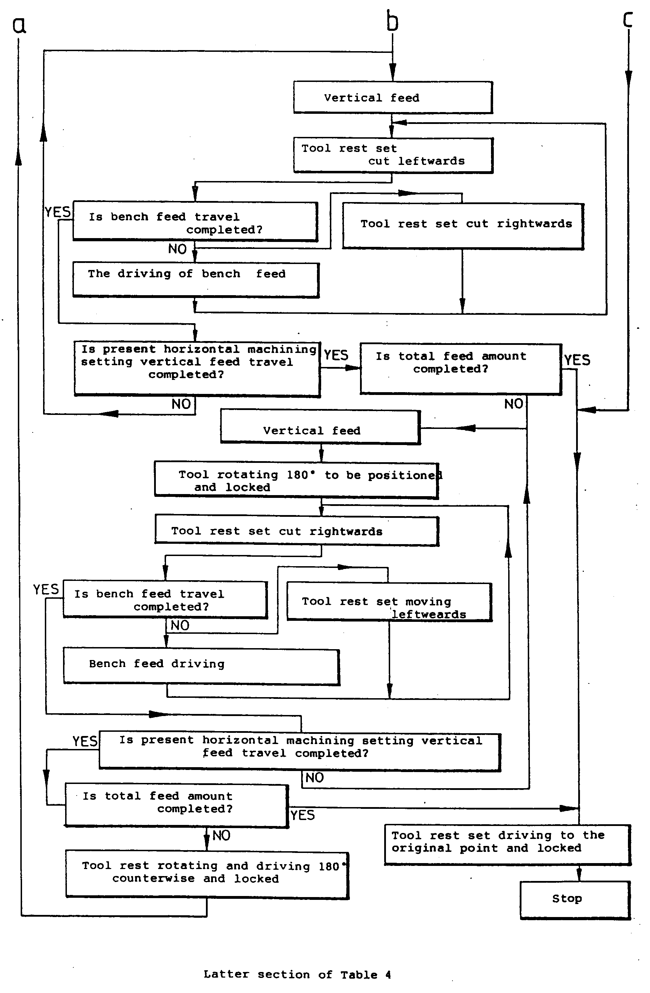

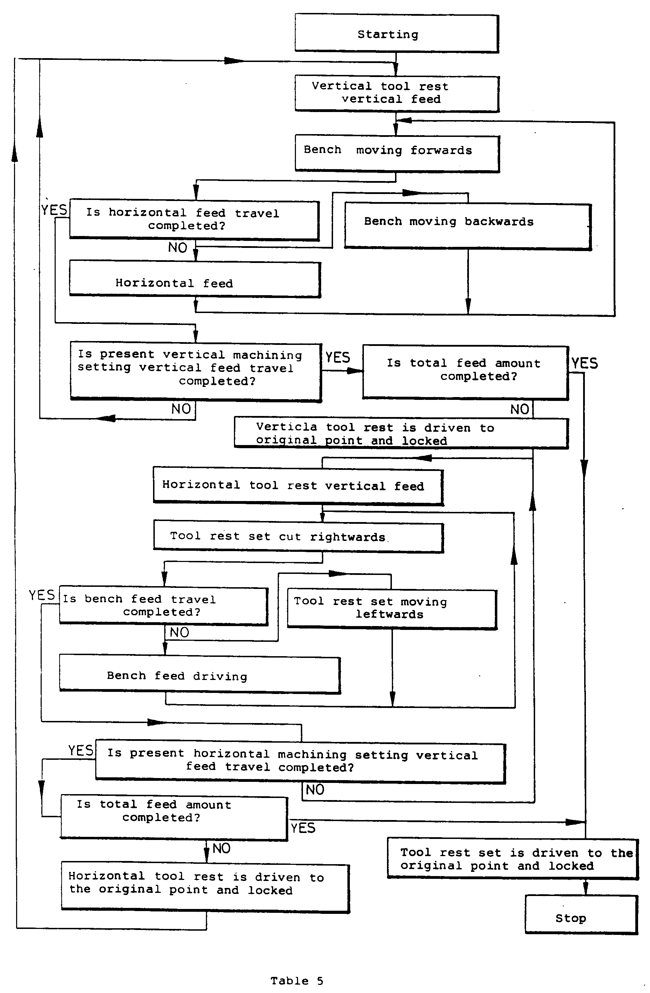

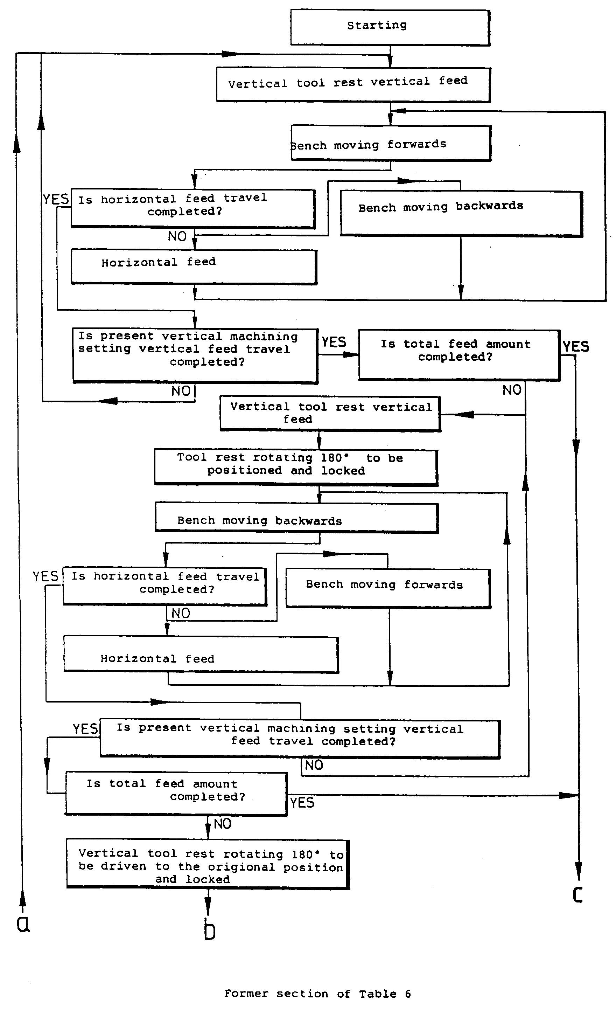

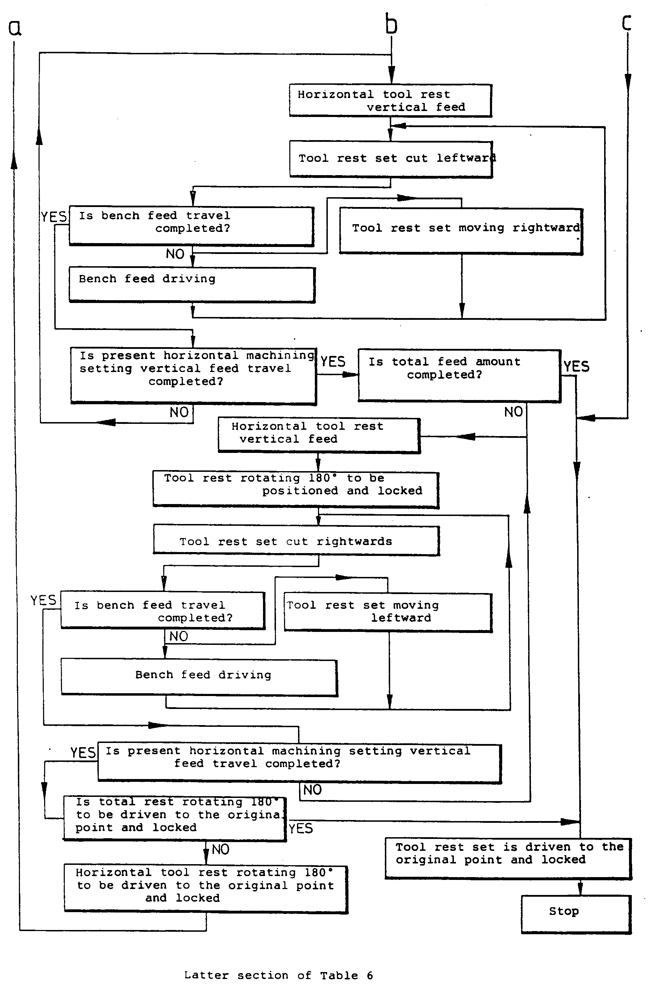

Figure 3 shows another modification of the machining apparatus of Figure 1. Here again, therefore, like reference numerals will be used for like parts, and only the modifications will be described in detail. Thus, the support frame 13 of the apparatus of Figure 3 carries a pair of longitudinally-spaced horizontal working tool guides 12a and 12b. Each of the guides 12a,12b supports a respective carriage 14a,14b, each of which is horizontally slidingly carried by its respective guide for transverse movement. Each carriage 14a,14b supports a respective working tool 16a, 16b. The tool 16a is arranged to contact the top of a workpiece 1 for performing work operations on the workpiece in a transverse plane, and the tool 16b is arranged to contact the top of the workpiece for performing work operations in a longitudinal plane.

Table 6 is a flow chart illustrating an operational cycle of the apparatus of Figure 3. Here again, it should be noted that the "horizontal" direction is the transverse direction, and that the "vertical" direction is the longitudinal direction.

## Claims

1. Apparatus for machining a workpiece (1) by grinding, milling and polishing whereby residual stresses within the workpiece are reduced comprising:
a machine body;
a bench (11) for supporting the workpiece and for moving the workpiece longitudinally along the machine body;
a support frame (13) having a portal structure and mounted on the machine body;
a transverse tool guide rail (12) carried by the support frame;
a tool carriage (14) movable along the tool guide rail transversely across the machine body;
a rotatable machine tool (16) carried by the tool carriage;
means for driving the machine tool;
wherein relative movement between the machine tool and the workpiece in transverse and longitudinal directions are brought about by bi-directional movement of the tool carriage and movement of the bench along the machine respectively;
characterised in that the machine tool is rotatable about a horizontal axis and angularly adjustable in 90° steps about a vertical axis for cutting operations directed in a transverse direction across the machine body and in a longitudinal direction along the body; and
a locking device being provided for locking the machine tool in a selected angular position.

2. Apparatus for machining a workpiece (1) by grinding, milling and polishing whereby residual stresses within the workpiece are reduced comprising:
a machine body;
a bench (11) for supporting the workpiece and for moving the workpiece longitudinally along the machine body;
a support frame (13) having a portal structure and mounted on the machine body;
at least one transverse guide rail (12 or 12a, 12b) carried by the support frame;
a first tool carriage (14a) and a second tool carriage (14b), each carriage being movable along said at least one transverse guide rail transversely across the machine body;
a first rotatable machine tool (16a) carried by the first tool carriage;
a second rotatable machine tool (16b) carried by the second tool carriage; and
means for driving the first and the second machine tools,
wherein relative movement between the first machine tool and the workpiece in a transverse direction is brought about by bi-directional movement of the first tool carriage along said at least one transverse guide rail, and relative movement between the second machine tool and the workpiece in a longitudinal direction is brought about by bi-directional movement of the bench along the machine;
characterised in that the first machine tool is rotatable about a horizontal longitudinal axis for cutting operations directed in a transverse direction across the machine body, and the second machine tool is rotatable about a horizontal transverse axis for cutting operations directed in a longitudinal direction along the machine body.

3. Apparatus according to claim 2, wherein said at least one transverse guide rail includes first and second transverse guide rails (12a, 12b), wherein the first tool carriage (14a) is carried by the first transverse guide rail, and the second tool carriage (14b) is carried by the second transverse guide rail.

4. Apparatus according to any one of the preceding claims, further comprising means for raising and lowering the or each transverse tool guide rail (12 or 12a, 12b).

## Patentansprüche

1. Vorrichtung zur maschinellen Bearbeitung eines Werkstückes (1) mittels Schleifen, Fräsen und Polieren, wodurch Eigenspannungen in dem Werkstück reduziert werden, welche folgendes aufweist:
einen Hauptkörper;
einen Maschinentisch (11) zur Abstützung des Werkstückes und zur Bewegung des Werkstückes in Längsrichtung längs des Maschinenkörpers;
einen Tragrahmen (13), welcher eine Portalkonstruktion hat und an dem Maschinenkörper angebracht ist;
eine querverlaufende Werkzeugführungsbahn (12), welche am Tragrahmen abgestützt ist;
einen Werkzeugschlitten (14), welcher entlang der Werkzeugführungsbahn quer zum Maschinenkörper beweglich ist;
ein Drehbearbeitungswerkzeug (16), welches von dem Werkzeugschlitten getragen wird;
eine Einrichtung zum Antreiben des Bearbeitungswerkzeuges;
wobei die Relativbewegung zwischen dem Bearbeitungswerkzeug und dem Werkstück in Querrichtungen und Längsrichtungen durch eine in zwei Richtungen gerichtete Bewegung des Werkzeugschlittens und eine Bewegung des Maschinentisches entlang des Maschinenkörpers jeweils bewerkstelligt wird,
**dadurch gekennzeichnet**, daß das Bearbeitungswerkzeug um eine horizontale Achse drehbar und in Winkelrichtung in 90°-Schritten um eine vertikale Achse zur Ausführung von spanenden Bearbeitungen in einer Querrichtung zu dem Maschinenkörper und in eine Längsrichtung entlang des Maschinenkörpers verstellbar ist; und
eine Sperreinrichtung vorgesehen ist, welche das Bearbeitungswerkzeug in einer gewünschten Winkelposition festlegt.

2. Vorrichtung zur maschinellen Bearbeitung eines Werkstückes (1) mittels Schleifen, Fräsen und Polieren, wodurch Eigenspannungen im Werkstück reduziert werden, welche folgendes aufweist:
einen Maschinenkörper;
einen Maschinentisch (11) zur Auflage des Werkstückes und zur Bewegung des Werkstückes in Längsrichtung entlang des Maschinenkörpers;
einen Tragrahmen (13), welcher eine Portalkonstruktion hat und an dem Maschinenkörper angebracht ist;
wenigstens eine querverlaufende Werkzeugführungsbahn (12 oder 12a, 12b), welche am Tragrahmen abgestützt ist;
einen ersten Werkzeugschlitten (14a) und einen zweiten Werkzeugschlitten (14b), wobei jeder Schlitten entlang wenigstens einer querverlaufenden Führungsbahn quer zum Maschinenkörper beweglich ist;
ein erstes Drehbearbeitungswerkzeug (16a), welches von dem ersten Werkzeugschlitten getragen wird;
ein zweites Drehbearbeitungswerkzeug (16b), welches vom zweiten Werkzeugschlitten getragen wird; und
eine Einrichtung zum Antreiben der ersten und der zweiten Bearbeitungswerkzeuge,
wobei die Relativbewegung zwischen dem ersten Bearbeitungswerkzeug und dem Werkstück in eine Querrichtung durch eine in zwei Richtungen gerichtete Bewegung des ersten Werkzeugschlittens entlang der wenigstens einen quer verlaufenden Führungsbahn bewerkstelligt wird und eine Relativbewegung zwischen dem zweiten Bearbeitungswerkzeug und dem Werkstück in eine Längsrichtung durch eine in zwei Richtungen gerichtete Bewegung des Maschinentisches entlang der Maschine bewerkstelligt wird;
**dadurch gekennzeichnet**, daß das erste Bearbeitungswerkzeug um eine horizontale Längsachse zur Ausführung einer spanenden Bearbeitung in einer Querrichtung zum Maschinenkörper drehbar ist und das zweite Bearbeitungswerkzeug um eine horizontale Querachse zur Ausführung von spanenden Bearbeitungen in einer Längsrichtung entlang des Maschinenkörpers drehbar ist.

3. Vorrichtung nach Anspruch 2, bei der die wenigstens eine quer verlaufende Führungsbahn erste und zweite, quer verlaufende Führungsbahnen (12a, 12b) umfaßt, und bei der der erste Werkzeugschlitten (14a) von der ersten querverlaufenden Führungsbahn getragen wird, und der zweite Werkzeugschlitten (14b) von der zweiten, querverlaufenden Führungsbahn getragen wird.

4. Vorrichtung nach einem der vorangehenden Ansprüche, welche ferner eine Einrichtung zum Heben und Senken der oder jeder, querverlaufenden Werkzeugführungsbahn (12 oder 12a, 12b) aufweist.

## Revendications

1. Appareil pour usiner une pièce d'usinage (1) par rectification, fraisage et polissage, par lequel des contraintes résiduelles dans la pièce sont réduites, comportant:
un corps de machine;
un banc (11) pour supporter la pièce d'usinage et pour déplacer longitudinalement la pièce d'usinage le long du corps de machine;
un bâti de support (13) ayant une structure de portique et monté sur le corps de machine;
un rail (12) de guidage transversal d'outil porté par le bâti de support;
un chariot (14) porte-outil mobile le long du rail de guidage d'outil, transversalement sur le corps de machine;
un outil d'usinage rotatif, porté par le chariot porte-outil;
un moyen pour entraîner l'outil d'usinage;
dans lequel le mouvement relatif entre l'outil d'usinage et la pièce d'usinage dans les directions transversale et longitudinale est provoqué respectivement par le déplacement du chariot porte-outil dans les deux directions et par le déplacement du banc le long de la machine;
caractérisé en ce que l'outil d'usinage est rotatif autour d'un axe horizontal et est réglable angulairement par pas de 90° autour d'un axe vertical pour des opérations d'usinage orientées dans une direction transversale sur le corps de machine et dans une direction longitudinale le long du corps; et
un dispositif de verrouillage étant prévu pour verrouiller l'outil d'usinage dans une position angulaire choisie.

2. Appareil pour usiner une pièce d'usinage (1) par rectification, fraisage et polissage, par lequel des contraintes résiduelles dans la pièce d'usinage sont réduites, comportant:
un corps de machine;
un banc (11) pour supporter la pièce d'usinage et pour déplacer longitudinalement la pièce d'usinage le long du corps de machine;
un bâti de support (13) ayant une structure de portique et monté sur le corps de machine;
au moins un rail de guidage transversal (12 ou 12a, 12b) porté par le bâti de support;
un premier chariot (14a) porte-outil et un deuxième chariot (14b) porte-outil, chaque chariot pouvant se déplacer le long dudit rail de guidage transversal au moins unique, transversalement sur le corps de machine;
un premier outil d'usinage rotatif (16a) porté par le premier chariot porte-outil;
un deuxième outil d'usinage rotatif (16b) porté par le deuxième chariot porte-outil; et
un moyen pour entraîner les premier et deuxième outils d'usinage,
dans lequel le mouvement relatif entre le premier outil d'usinage et la pièce d'usinage dans une direction transversale est provoqué par le déplacement du premier chariot porte-outil dans les deux directions sur ledit rail de guidage transversal au moins unique, et le mouvement relatif entre le deuxième outil d'usinage et la pièce d'usinage dans une direction longitudinale est provoqué par le déplacement du banc dans les deux directions sur la machine;
caractérisé en ce que le premier outil d'usinage peut tourner autour d'un axe longitudinal horizontal pour des opérations d'usinage orientées dans une direction transversale sur le corps de machine, et le deuxième outil d'usinage peut tourner autour d'un axe transversal horizontal pour des opérations d'usinage orientées dans une direction longitudinale sur le corps de machine.

3. Appareil selon la revendication 2, dans lequel ledit rail de guidage transversal au moins unique comprend un premier et un second rails de guidage transversal 12a, 12b, dans lequel le premier chariot 14a porte-outil est porté par le premier rail de guidage transversal et le deuxième chariot 14b porte-outil est porté par le deuxième rail de guidage transversal.

4. Appareil selon l'une quelconque des revendications précédentes, comportant en outre un moyen pour lever et abaisser le ou chaque rail de guidage transversal (12 ou 12a, 12b) d'outil.
